# EUROPEAN PATENT APPLICATION

(11) **EP 4 836 249 A1**
(43) Date of publication of application: **04.11.2026**
(21) Application number: 25824767.5
(22) Date of filing: 13.05.2025
(51) Int. Cl.: H02K 3/28, H02K 3/50, H02K 41/02, H02K 33/18, B65G 54/02

(54) **DIRECTION-SWITCHING STATOR MODULE, MAGNETIC DRIVE CONVEYOR LINE, AND MAGNETIC DRIVE CONVEYOR SYSTEM**

(30) Priority: 25.06.2024 CN 202410827098
(71) Applicant: Shanghai Golytec Automation Co., Ltd., Shanghai 201100 (CN)
(72) Inventor: CHI, Feng, Shanghai 201100 (CN); CHEN, Zenghui, Shanghai 201100 (CN); WU, Jiabin, Shanghai 201100 (CN)
(74) Representative: Huang, Liwei
(86) International application number: PCT/CN2025/094424
(87) International publication number: WO 2026/001379

(57) **Abstract**

The present application discloses a direction-switching stator module, a magnetic drive conveyor line, and a magnetic drive conveyor system. The direction-switching stator module includes a direction-switching stator body, a direction-switching armature winding, a first guide assembly, and a second guide assembly. A first guide member includes a first support and a plurality of first rollers. A first driving member is configured to drive the first support to ascend and descend. The first rollers are rotatable about a first axis, and are configured to be in contact with a mover module, so as to guide the mover module to move in a first direction. A second guide member includes a second support and a plurality of second rollers. A second driving member is configured to drive the second support to ascend and descend. The second rollers are rotatable about a second axis, and are configured to be in contact with the mover module, so as to guide the mover module to move in a second direction. The direction-switching stator module of the present application can implement rapid direction switching and rapid movement of the mover module, thereby improving the conveying efficiency of the magnetic drive conveyor system.

## Description

### TECHNICAL FIELD

The present application relates to the technical field of magnetic drive, and in particular, to a direction-switching stator module, a magnetic drive conveyor line, and a magnetic drive conveyor system.

### BACKGROUND

A magnetic drive conveyor system typically includes magnetically coupled stator modules and a mover module. A plurality of stator modules are combined to form a stator conveyor line, and coil windings of the stator conveyor line are periodically energized to generate a traveling wave magnetic field. The traveling wave magnetic field interacts with permanent magnet arrays of the mover module to drive the mover module to move along a predetermined route. When carrying an object, the mover module may drive the object thereon to move, thereby achieving transportation of the object. In the process of driving the mover module to move on the stator conveyor line, in some application scenarios, the mover module needs to be switched onto a different stator conveyor line by using a connection module to implement direction switching of the mover module.

However, in the related art, when the direction of the mover module is switched, the mover module generally moves onto the connection module, and then the connection module is driven by a motor to rotate to implement direction switching of the mover module. Since the connection module and the mover module are usually heavy and an output shaft of the motor has a large moment of inertia, rapid rotation cannot be achieved. Furthermore, due to the large weight of the mover module, the mover module moves slowly on the connection module, reducing conveying efficiency of a magnetic drive conveyor system.

### SUMMARY

The present application provides a direction-switching stator module, a magnetic drive conveyor line, and a magnetic drive conveyor system, which can implement rapid direction switching and rapid movement of a mover module, thereby improving conveying efficiency of the magnetic drive conveyor system.

In a first aspect, the present application provides a direction-switching stator module, which is configured to implement direction switching of a mover module on a magnetic drive conveyor line. The direction-switching stator module includes a direction-switching stator body; a direction-switching armature winding, arranged on the direction-switching stator body, and including a first direction-switching winding extending in a first direction and a second direction-switching winding extending in a second direction, where the first direction-switching winding is configured to drive the mover module to move in the first direction, and the second direction-switching winding is configured to drive the mover module to move in the second direction; a first guide assembly, including a first guide member and a first driving member for driving the first guide member to ascend and descend, where the first guide member extends in the first direction and is configured to limit and guide the mover module, so as to guide the mover module to move in the first direction, the first guide member includes a first support and a plurality of first rollers, the first driving member is configured to drive the first support to ascend and descend, the first rollers are rotatably connected to the first support and are rotatable about a first axis, the first axis is perpendicular to the first direction and a vertical direction, and the plurality of first rollers are arranged in the first direction and configured to be in contact with the mover module, so as to guide the mover module to move in the first direction; and a second guide assembly, including a second guide member and a second driving member for driving the second guide member to ascend and descend, where the second guide member extends in the second direction and is configured to limit and guide the mover module, so as to guide the mover module to move in the second direction, the second guide member includes a second support and a plurality of second rollers, the second driving member is configured to drive the second support to ascend and descend, the second rollers are rotatably connected to the second support and are rotatable about a second axis, the second axis is perpendicular to the second direction and the vertical direction, and the plurality of second rollers are arranged in the second direction and configured to be in contact with the mover module, so as to guide the mover module to move in the second direction.

In some embodiments of the present application, the first guide member is spaced apart from the direction-switching stator body in the second direction, and the second guide member is spaced apart from the direction-switching stator body in the first direction, such that the first guide member and the second guide member can be arranged, ascend and descend more conveniently.

In some embodiments of the present application, the first driving member and the second driving member are both fixed to a side portion of the direction-switching stator body, such that the direction-switching stator module can be moved as a whole.

In some embodiments of the present application, when the mover module moves onto the direction-switching stator module, the first rollers and the second rollers are all located below the mover module, and the first rollers and the second rollers are configured to come into contact with a bottom of the mover module, such that the first rollers and the second rollers can provide sufficient support for the mover module.

In some embodiments of the present application, the first support is spaced apart from the direction-switching stator body in the second direction, and the first rollers are located on a side of the first support close to the direction-switching stator body; and the second support is spaced apart from the direction-switching stator body in the first direction, and the second rollers are located on a side of the second support close to the direction-switching stator body, such that the second rollers can come into contact with the mover module more easily.

In some embodiments of the present application, one first guide assembly is arranged on each of two sides of the direction-switching stator body in the second direction, a first limiting groove is defined between the first supports of the two first guide assemblies, and the first limiting groove extends in the first direction to guide the mover module to move in the first direction; and one second guide assembly is arranged on each of two sides of the direction-switching stator body in the first direction, a second limiting groove is defined between the second supports of the two second guide assemblies, and the second limiting groove extends in the second direction to guide the mover module to move in the second direction, such that a deviation of the movement direction of the mover module is prevented.

In some embodiments of the present application, the first direction-switching winding and the second direction-switching winding are arranged in a crossed manner, such that the area of a region for arranging the direction-switching armature winding is reduced.

In a second aspect, the present application further provides a magnetic drive conveyor line, including a first stator module, a second stator module, and the direction-switching stator module in any one of the above embodiments, where the first stator module extends in the first direction, the second stator module extends in the second direction, and the direction-switching stator module is located at a junction between the first stator module and the second stator module, where the first stator module includes a first stator body and a first armature winding that extend in the first direction, the second stator module includes a second stator body and a second armature winding that extend in the second direction, two sides of the direction-switching stator body are connected to the first stator body and the second stator body respectively, the first direction-switching winding is connected to the first armature winding, and the second direction-switching winding is connected to the second armature winding.

In some embodiments of the present application, the first stator module further includes a third guide member, and the third guide member extends in the first direction and is configured to limit and guide the mover module, so as to guide the mover module to move in the first direction; the third guide member includes a third support and a plurality of third rollers, where the third support extends in the first direction, the third rollers are rotatably connected to the third support and are rotatable about a third axis, the third axis is perpendicular to the first direction and the vertical direction, the plurality of third rollers are arranged in the first direction and configured to be in contact with the mover module, so as to guide the mover module to move in the first direction; the second stator module further includes a fourth guide member, and the fourth guide member extends in the second direction and is configured to limit and guide the mover module, so as to guide the mover module to move in the second direction; the fourth guide member includes a fourth support and a plurality of fourth rollers, where the fourth support extends in the second direction, the fourth rollers are rotatably connected to the fourth support and are rotatable about a fourth axis, the fourth axis is perpendicular to the second direction and the vertical direction, and the plurality of fourth rollers are arranged in the second direction and configured to be in contact with the mover module, so as to guide the mover module to move in the second direction.

In a third aspect, the present application further provides a magnetic drive conveyor system, including a mover module and the magnetic drive conveyor line in any one of the above embodiments, where the mover module includes: a mover body; a first permanent magnet array, arranged on the mover body and configured to be magnetically coupled to the first direction-switching winding and the first armature winding to drive the mover module to move in the first direction; and a second permanent magnet array, arranged on the mover body and configured to be magnetically coupled to the second direction-switching winding and the second armature winding to drive the mover module to move in the second direction.

The present application has the following beneficial effects: Direction switching of the mover module on the magnetic drive conveyor line may be implemented in conjunction with driving forces in different directions provided by the first direction-switching winding and the second direction-switching winding, as well as ascending and descending of the first guide member and the second guide member. When the direction of the mover module needs to be switched, only the first guide member and the second guide member need to be driven to ascend and descend, the height and position of the mover module do not need to be changed in the whole direction-switching process, and the first guide member and the second guide member may ascend and descend quickly to achieve rapid direction switching of the mover module, thereby improving the direction-switching efficiency of the mover module, and accordingly, improving the conveying efficiency of the magnetic drive conveyor system. In addition, the first rollers are arranged on the first support, the second rollers are arranged on the second support, the first rollers and the second rollers may be used to guide the mover module, such that extra rollers and support assemblies for mounting the rollers do not need to be arranged on the mover module, and the number of components of the mover module is reduced, thereby reducing the weight and production cost of the mover module to allow the mover module to move more quickly on the direction-switching stator module. In addition, the structure of the mover module is simpler, thereby facilitating transfer of the mover module; and the probability of motion interference and collision with protruding obstacles when the mover module moves on the magnetic drive conveyor line is reduced, thereby further improving the conveying efficiency of the magnetic drive conveyor system.

### BRIEF DESCRIPTION OF THE DRAWINGS

To more clearly explain the technical solutions in the embodiments of the present application or the related art, accompanying drawings used for describing the embodiments of the present application or the related art are briefly introduced below. Obviously, the accompanying drawings in the following description merely illustrate some embodiments of the present application. Those skilled in the art may obtain other drawings according to these accompanying drawings without creative efforts.
FIG. 1 is a schematic structural diagram of a direction-switching stator module from a first perspective according to some embodiments of the present application;
FIG. 2 is a schematic structural diagram of the direction-switching stator module from a second perspective according to some embodiments of the present application;
FIG. 3 is a schematic diagram of a mover module located on the direction-switching stator module according to some embodiments of the present application;
FIG. 4 is a schematic structural diagram of a magnetic drive conveyor line according to some embodiments of the present application;
FIG. 5 is a schematic structural diagram of a magnetic drive conveyor system according to some embodiments of the present application;
FIG. 6 is a schematic structural diagram of the mover module from a third perspective according to some embodiments of the present application;
FIG. 7 is a schematic structural diagram of the mover module from a fourth perspective according to some embodiments of the present application; and
FIG. 8 is a schematic structural diagram of the magnetic drive conveyor system according to some other embodiments of the present application.

Reference signs:
10, direction-switching stator module; 11, direction-switching stator body; 111, accommodating chamber; 112, opening; 12, direction-switching armature winding; 121, first direction-switching winding; 122, second direction-switching winding; 131, first guide member; 131a, first support; 131b, first roller; 132, first driving member; 141, second guide member; 141a, second support; 141b, second roller; 142, second driving member; 151, first limiting groove; 152, second limiting groove; 161, horizontal plate; 162, vertical plate; 20, first stator module; 21, first stator body; 22, first armature winding; 23, third guide member; 231, third support; 232, third roller; 30, second stator module; 31, second stator body; 32, second armature winding; 33, fourth guide member; 331, fourth support; 332, fourth roller; 40, mover module; 41, mover body; 42, first permanent magnet array; 43, second permanent magnet array; 44, accommodating groove; 50, support platform.

### DETAILED DESCRIPTION

To better clarify the objectives, technical solutions, and advantages of the present application, the present application is described in further detail below in conjunction with accompanying drawings and embodiments. It should be understood that the specific embodiments described below are merely used for explaining the present application rather than limiting the present application.

The present application provides a direction-switching stator module, a magnetic drive conveyor line, and a magnetic drive conveyor system to solve the problems in the related art that when the direction of a mover module is switched, the mover module generally moves onto a connection module, then the connection module is driven by a motor to rotate to implement direction switching of the mover module, and since the connection module and the mover module are usually heavy and an output shaft of the motor has a large moment of inertia, rapid rotation cannot be achieved; and furthermore, due to the large weight of the mover module, the mover module moves slowly on the connection module, reducing the conveying efficiency of a magnetic drive conveyor system.

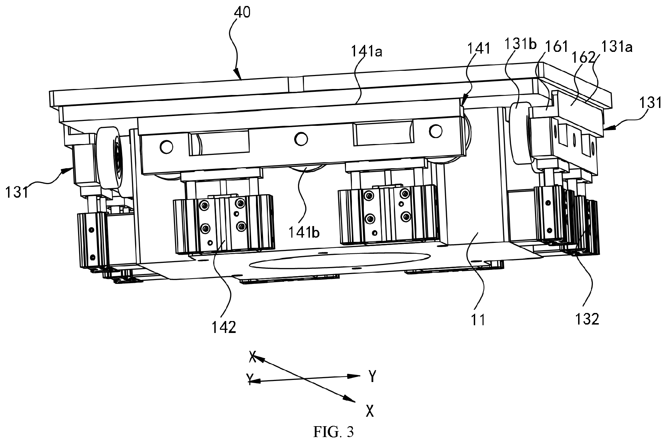

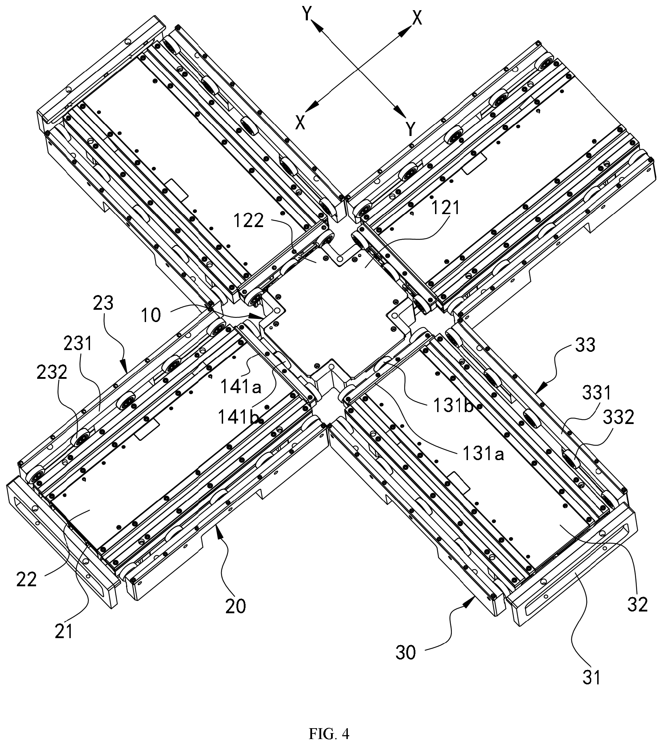

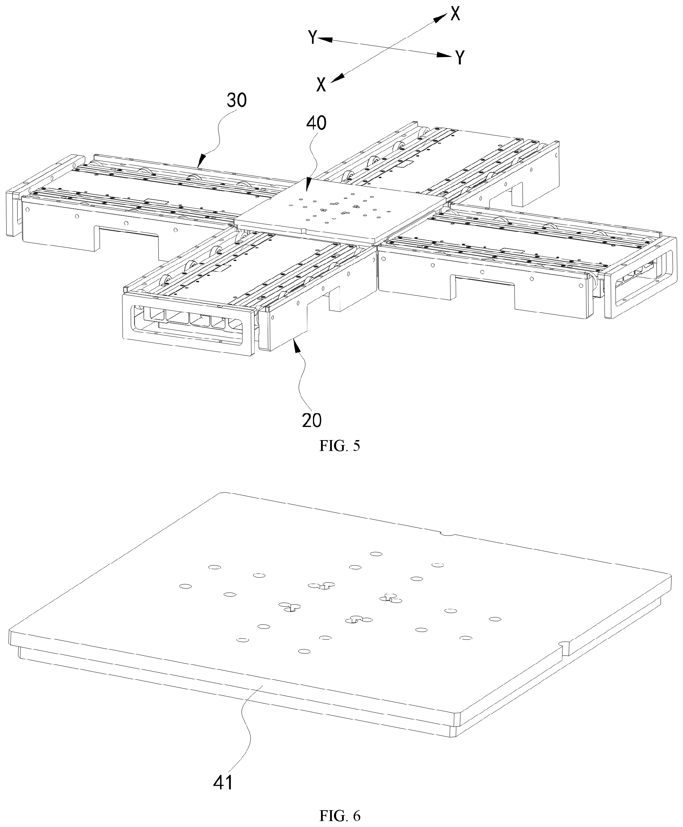

In a first aspect, the present application provides a direction-switching stator module, which is configured to implement direction switching of a mover module 40 (as shown in FIG. 3 or FIG. 5) on a magnetic drive conveyor line. The direction-switching stator module 10 may be spliced with other stator modules on the magnetic drive conveyor line (as shown in FIG. 4). The mover module 40 is a device, configured to carry objects to be conveyed, in a magnetic drive conveyor system, and is a magnetic mover. When the mover module 40 moves along the magnetic drive conveyor line to the direction-switching stator module 10, the direction-switching stator module 10 may provide magnetic power for the mover module 40 to drive the mover module 40 to move along the direction-switching stator module 10, such that direction switching of the mover module 40 on the magnetic drive conveyor line is implemented by the direction-switching stator module 10.

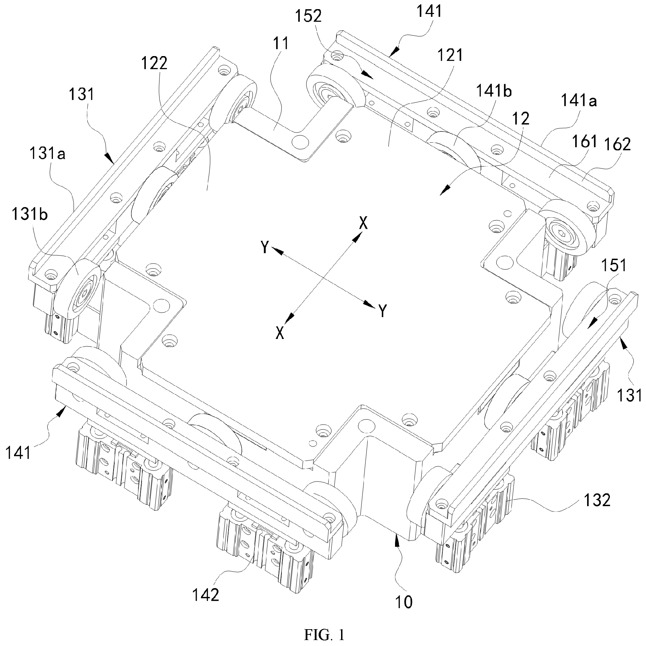

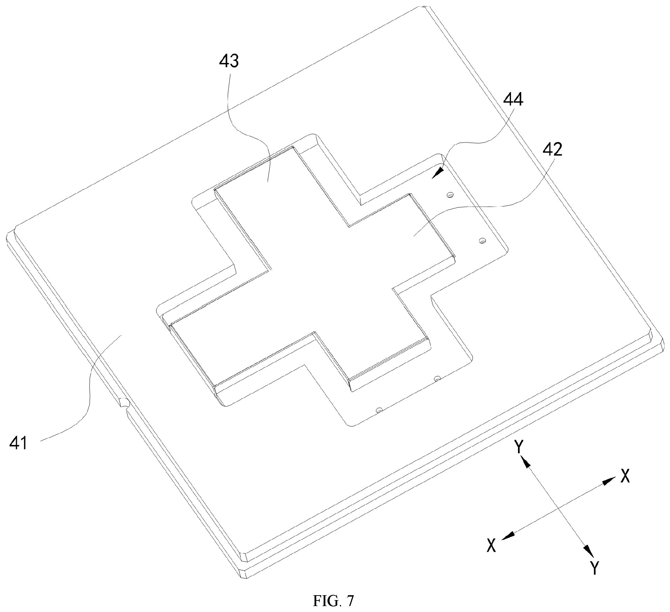

Specifically, as shown in FIG. 1, the direction-switching stator module 10 includes a direction-switching stator body 11 and a direction-switching armature winding 12. The direction-switching armature winding 12 is arranged on the direction-switching stator body 11, and includes a first direction-switching winding 121 extending in a first direction XX and a second direction-switching winding 122 extending in a second direction YY. The first direction-switching winding 121 is configured to drive the mover module 40 to move in the first direction XX, and the second direction-switching winding 122 is configured to drive the mover module 40 to move in the second direction YY. It can be understood that the direction-switching stator body 11 is configured to support the direction-switching armature winding 12. The first direction-switching winding 121 and the second direction-switching winding 122 are each provided with a coil, and the coil, when energized, generates a magnetic field. A permanent magnet (as shown in FIG. 7) on the mover module 40 may be magnetically coupled to the coil to generate a driving force under the current excitation of the coil, so as to push the entire mover module 40 to move along the direction-switching stator module 10. The specific operating principle of magnetic drive has been disclosed in the related art, and details are not described in the present application. The first direction XX may be perpendicular to the second direction YY, or an included angle of 30°, 45°, 60°, 75°, or the like may be formed between the first direction XX and the second direction YY.

More specifically, the direction-switching stator module 10 further includes a first guide assembly and a second guide assembly. The first guide assembly includes a first guide member 131 and a first driving member 132 for driving the first guide member 131 to ascend and descend, where the first guide member 131 extends in the first direction XX and is configured to limit and guide the mover module 40, so as to guide the mover module 40 to move in the first direction XX. The second guide assembly includes a second guide member 141 and a second driving member 142 for driving the second guide member 141 to ascend and descend, and the second guide member 141 extends in the second direction YY and is configured to limit and guide the mover module 40, so as to guide the mover module 40 to move in the second direction YY.

It can be understood that as shown in FIG. 1 to FIG. 3, when the mover module 40 needs to move onto the direction-switching stator module 10 from another stator module on the magnetic drive conveyor line in the first direction XX, the second driving member 142 may drive the second guide member 141 to descend to be spaced apart from the mover module 40, such that the second guide member 141 avoids a movement trajectory of the mover module 40, and the first driving member 132 drives the first guide member 131 to ascend to come into contact with the mover module 40. When the first direction-switching winding 121 drives the mover module 40 to move in the first direction XX, the mover module 40 is limited and guided by the first guide member 131, so as to be guided to smoothly move onto the direction-switching stator module 10 in the first direction XX. When the mover module 40 needs to be switched to move in the second direction YY, first, the second driving member 142 may drive the second guide member 141 to ascend to come into contact with the mover module 40, such that the mover module 40 is supported by the second guide member 141; and then, the first driving member 132 drives the first guide member 131 to descend to be spaced apart from the mover module 40. When the second direction-switching winding 122 drives the mover module 40 to move in the second direction YY, the mover module 40 is limited and guided by the second guide member 141, so as to be guided to smoothly move onto another stator module in the second direction YY.

It should also be noted that compared with the related art in which the entire connection module needs to be driven to rotate synchronously with the mover module 40 to implement direction switching of the mover module 40, in the present application, direction switching of the mover module 40 on the magnetic drive conveyor line may be implemented in conjunction with driving forces in different directions provided by the first direction-switching winding 121 and the second direction-switching winding 122, as well as ascending and descending of the first guide member 131 and the second guide member 141. When the direction of the mover module 40 needs to be switched, only the first guide member 131 and the second guide member 141 need to be driven to ascend and descend, the height and position of the mover module 40 do not need to be changed in the whole direction-switching process, and since the weight of the first guide member 131 and the second guide member 141 is relatively low, the first guide member 131 and the second guide member 141 may ascend and descend easily and quickly to achieve rapid direction switching of the mover module 40, thereby improving the direction-switching efficiency of the mover module 40, and accordingly, improving the conveying efficiency of the magnetic drive conveyor system.

Specifically, the first guide member 131 includes a first support 131a and a plurality of first rollers 131b, where the first driving member 132 is configured to drive the first support 131a to ascend and descend, the first rollers 131b are rotatably connected to the first support 131a and are rotatable about a first axis, the first axis is perpendicular to the first direction XX and a vertical direction, and the plurality of first rollers 131b are arranged in the first direction XX and configured to be in contact with the mover module 40, so as to guide the mover module 40 to move in the first direction XX. The second guide member 141 includes a second support 141a and a plurality of second rollers 141b, where the second driving member 142 is configured to drive the second support 141a to ascend and descend, and the second rollers 141b are rotatably connected to the second support 141a and are rotatable about a second axis, the second axis is perpendicular to the second direction YY and the vertical direction, and the plurality of second rollers 141b are arranged in the second direction YY and configured to be in contact with the mover module 40, so as to guide the mover module 40 to move in the second direction YY.

It can be understood that when the first driving member 132 drives the first support 131a to ascend and descend, the first rollers 131b may be driven to ascend and descend synchronously. When the mover module 40 needs to move in the first direction XX, the first rollers 131b may be used to come into contact with the mover module 40, and compared with the friction force of sliding friction, the friction force of rolling friction is relatively small, such that the friction force between the mover module 40 and the first guide member 131 may be reduced, thereby allowing the mover module 40 to move more smoothly. When the second driving member 142 drives the second support 141a to ascend and descend, the second rollers 141b may be driven to ascend and descend synchronously. When the mover module 40 needs to move in the second direction YY, the second rollers 141b may be used to come into contact with the mover module 40, and compared with the friction force of sliding friction, the friction force of rolling friction is relatively small, such that the friction force between the mover module 40 and the second guide member 141 may be reduced, thereby allowing the mover module 40 to move more smoothly.

In addition, compared with the related art in which a plurality of rollers need to be arranged on the mover module 40 to provide guidance for the mover module 40, in the present application, the first rollers 131b are arranged on the first support 131a, the second rollers 141b are arranged on the second support 141a, and the first rollers 131b and the second rollers 141b are used to guide the mover module 40, such that extra rollers and support assemblies for mounting the rollers do not need to be arranged on the mover module 40, and the number of components of the mover module 40 is reduced, thereby reducing the weight and production cost of the mover module 40 to allow the mover module 40 to move more quickly on the direction-switching stator module. Moreover, the structure of the mover module 40 is simpler, thereby facilitating transfer of the mover module 40; and the probability of motion interference and collision with protruding obstacles when the mover module 40 moves on the magnetic drive conveyor line is reduced, thereby further improving the conveying efficiency of the magnetic drive conveyor system.

In one embodiment, the first guide member 131 is spaced apart from the direction-switching stator body 11 in the second direction YY, and the second guide member 141 is spaced apart from the direction-switching stator body 11 in the first direction XX, such that the ascending and descending trajectories of the first guide member 131 and the second guide member 141 avoid the direction-switching stator body 11, the first guide member 131 and the second guide member 141 can be arranged, ascend and descend more conveniently, and avoiding holes or avoiding slots for movements of the first guide member 131 and the second guide member 141 do not need to be provided in the direction-switching stator body 11.

In one embodiment, the first driving member 132 and the second driving member 142 are both fixed to a side portion of the direction-switching stator body 11, such that the arrangement of components such as the direction-switching armature winding 12 on the direction-switching stator body 11 is not affected by the first driving member 132 and the second driving member 142, the movement of the mover module 40 on the direction-switching stator body 11 is not hindered by the first driving member 132 and the second driving member 142, the first driving member 132 and the second driving member 142 may be transferred together with the direction-switching stator body 11, and the position of the entire direction-switching stator module 10 on the magnetic drive conveyor line can be changed. The first driving member 132 and the second driving member 142 may be motors, air cylinders, electric cylinders, or other driving members, and the specific type and size of the first driving member 132 and the second driving member 142 are not limited in the present application.

In one embodiment, as shown in FIG. 1 to FIG. 3, when the mover module 40 moves onto the direction-switching stator module 10, the first rollers 131b and the second rollers 141b are all located below the mover module 40 and come into contact with the bottom of the mover module 40 to provide sufficient support for the mover module 40, such that the support force provided for the mover module 40 by the first guide member 131 and the second guide member 141 is reduced, thereby achieving more rapid direction switching of the mover module 40.

In one embodiment, further referring to FIG. 1, the first support 131a is spaced apart from the direction-switching stator body 11 in the second direction YY, and the first rollers 131b are located on a side of the first support 131a close to the direction-switching stator body 11, such that the first rollers 131b may come into contact with the mover module 40 more easily; and the second support 141a is spaced apart from the direction-switching stator body 11 in the first direction XX, and the second rollers 141b are arranged on a side of the second support 141a close to the direction-switching stator body 11, such that the second rollers 141b may come into contact with the mover module 40 more easily.

In one embodiment, as shown in FIG. 1 to FIG. 3, one first guide assembly is arranged on each of two sides of the direction-switching stator body 11 in the second direction YY, a first limiting groove 151 is defined between the first supports 131a of the two first guide assemblies, and the first limiting groove 151 extends in the first direction XX, so as to guide the mover module 40 to move in the first direction XX; and one second guide assembly is arranged on each of two sides of the direction-switching stator body 11 in the first direction XX, a second limiting groove 152 is defined between the second supports 141a of the two second guide assemblies, and the second limiting groove 152 extends in the second direction YY, so as to guide the mover module 40 to move in the second direction YY. It can be understood that when the mover module 40 moves on the direction-switching stator module 10 in the first direction XX, the first limiting groove 151 may be used to limit the mover module 40 to prevent a deviation of the movement direction of the mover module 40, such that the mover module 40 can move stably in the first direction XX; and when the mover module 40 moves on the direction-switching stator module 10 in the second direction YY, the second limiting groove 152 may be used to limit the mover module 40 to prevent a deviation of the movement direction of the mover module 40, such that the mover module 40 can move stably in the second direction YY.

Specifically, the first supports 131a and the second supports 141a may each be generally L-shaped. The first supports 131a and the second supports 141a each include a horizontal plate 161 and a vertical plate 162, where the horizontal plate 161 is arranged horizontally, and the vertical plate 162 is located on an edge of a side of the horizontal plate 161 away from the direction-switching stator body 11 and is perpendicular to the horizontal plate 161. The first limiting groove 151 is defined between the vertical plates 162 of the two first supports 131a, and the second limiting groove 152 is defined between the vertical plates 162 of the two second supports 141a.

The first rollers 131b are located on sides, close to the mover module 40, of the horizontal plates 161 of the first supports 131a, top ends of the first rollers 131b are higher than top surfaces of the horizontal plates 161, the second rollers 141b are located on sides, close to the mover module 40, of the horizontal plates 161 of the second supports 141a, and top ends of the second rollers 141b are higher than the top surfaces of the horizontal plates 161. When the first supports 131a ascend to allow the first rollers 131b to be in contact with the mover module 40, the mover module 40 is located between the vertical plates 162 of the two first supports 131a, and the edges of the mover module 40 may be in contact with the vertical plates 162 of the first supports 131a, such that the mover module 40 can move stably in the first direction XX. When the second supports 141a ascend to allow the second rollers 141b to be in contact with the mover module 40, the mover module 40 is located between the vertical plates 162 of the two second supports 141a, and the edges of the mover module 40 may be in contact with the vertical plates 162 of the second supports 141a, such that the mover module 40 can move stably in the second direction YY.

In one embodiment, the first direction-switching winding 121 and the second direction-switching winding 122 are arranged in a crossed manner, such that an overlapping region is formed between the first direction-switching winding 121 and the second direction-switching winding 122, and the area of a region for arranging the direction-switching armature winding 12 may be reduced, thereby further facilitating the arrangement of the first direction-switching winding 121 and the second direction-switching winding 122.

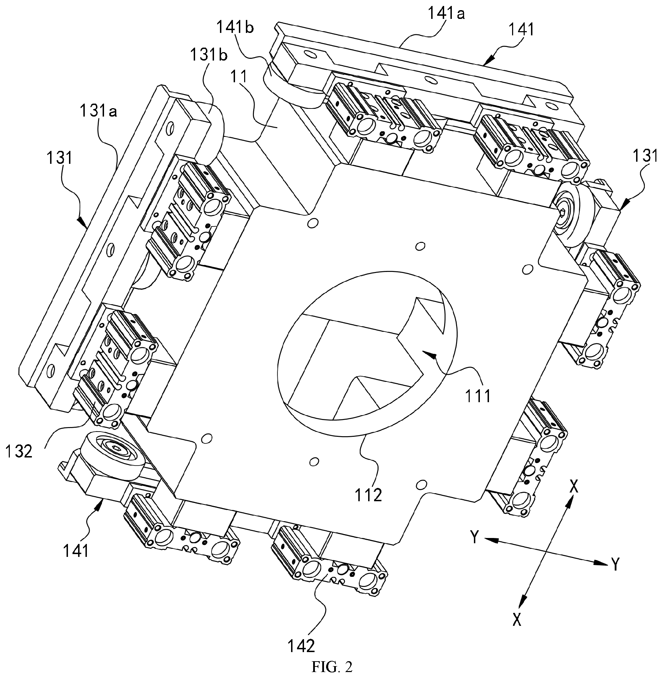

In one embodiment, as shown in FIG. 2, the direction-switching stator body 11 may be provided with an accommodating chamber 111, which provides an accommodating space for an electronic control assembly and other devices. The electronic control assembly may control operation of electronic devices such as the direction-switching armature winding 12, and may reduce the use of materials and weight of the direction-switching stator body 11, thus reducing the production cost. Further, an opening 112 communicating with the accommodating chamber 111 may be provided in the bottom of the direction-switching stator body 11, the opening 112 may serve as a heat-dissipation opening 112, and heat produced by the electronic devices such as the electronic control assembly may be dissipated via the opening 112; and the opening 112 is located at the bottom of the direction-switching stator body 11, such that the heat flow is prevented from rushing upward to the direction-switching armature winding 12, thereby avoiding overheating and burnout of the direction-switching armature winding 12.

In a second aspect, on the basis of the direction-switching stator module 10 mentioned above, the present application further provides a magnetic drive conveyor line. As shown in FIG. 4, the magnetic drive conveyor line includes a first stator module 20, a second stator module 30, and the direction-switching stator module 10 in any one of the above embodiments, where the first stator module 20 extends in a first direction XX, the second stator module 30 extends in a second direction YY, and the direction-switching stator module 10 is located at a junction between the first stator module 20 and the second stator module 30.

The first stator module 20 includes a first stator body 21 and a first armature winding 22 that extend in the first direction XX, and the second stator module 30 includes a second stator body 31 and a second armature winding 32 that extend in the second direction YY. Two sides of the direction-switching stator body 11 are connected to the first stator body 21 and the second stator body 31 respectively. The first direction-switching winding 121 is connected to the first armature winding 22, and the second direction-switching winding 122 is connected to the second armature winding 32.

It should be noted that the first stator module 20 and the second stator module 30 may be stator modules extending in different directions, and the first stator module 20 and the second stator module 30 may provide magnetic power for the mover module 40, so as to drive the mover module 40 to make linear movements along the first stator module 20 and the second stator module 30. The linear movements may include a rectilinear movement and a curvilinear movement. When the mover module 40 moves on the second stator module 30 in the second direction YY, the second armature winding 32 drives the mover module 40 to move.

In one embodiment, the first stator module 20 further includes a third guide member 23, where the third guide member 23 extends in the first direction XX and is configured to limit and guide the mover module 40, so as to guide the mover module 40 to move in the first direction XX. The third guide member 23 includes a third support 231 and a plurality of third rollers 232, where the third support 231 extends in the first direction XX, the third rollers 232 are rotatably connected to the third support 231 and are rotatable about a third axis, the third axis is perpendicular to the first direction XX and the vertical direction, and the plurality of third rollers 232 are arranged in the first direction XX and configured to be in contact with the mover module 40 to guide the mover module 40 to move in the first direction XX.

The second stator module 30 further includes a fourth guide member 33, where the fourth guide member 33 extends in the second direction YY and is configured to limit and guide the mover module 40, so as to guide the mover module 40 to move in the second direction YY. The fourth guide member 33 includes a fourth support 331 and a plurality of fourth rollers 332, where the fourth support 331 extends in the second direction YY, the fourth rollers 332 are rotatably connected to the fourth support 331 and are rotatable about a fourth axis, the fourth axis is perpendicular to the second direction YY and the vertical direction, and the plurality of fourth rollers 332 are arranged in the second direction YY and configured to be in contact with the mover module 40 to guide the mover module 40 to move in the second direction YY.

It should be noted that in a case where the mover module 40 moves onto the direction-switching stator module 10, when the first rollers 131b ascend to be in contact with the mover module 40, the first support 131a is connected to the third support 231, and the first rollers 131b and the third rollers 232 are arranged side by side; and when the second rollers 141b ascend to be in contact with the mover module 40, the second support 141a is connected to the fourth support 331, the second rollers 141b and the fourth rollers 332 are arranged side by side, such that position switching of the mover module 40 between the first stator module 20, the direction-switching stator module 10 and the second stator module 30 is smoother. "Connected" mentioned above means that the extension direction of the first support 131a is colinear with the extension direction of the third support 231 and that the first rollers 131b are as high as the third rollers 232; or, "connected" mentioned above means that the extension direction of the second support 141a is colinear with the extension direction of the fourth support 331, and the second rollers 141b are as high as the fourth rollers 332.

In a third aspect, on the basis of the magnetic drive conveyor line mentioned above, the present application further provides a magnetic drive conveyor system. As shown in FIG. 5 to FIG. 8, the magnetic drive conveyor system includes a mover module 40 and a magnetic drive conveyor line in any one of the above embodiments. The mover module 40 includes a mover body 41, a first permanent magnet array 42 and a second permanent magnet array 43, where the first permanent magnet array 42 is arranged on the mover body 41 and is configured to be magnetically coupled to the first direction-switching winding 121 and the first armature winding 22 to drive the mover module 40 to move in the first direction XX, and the second permanent magnet array 43 is arranged on the mover body 41 and is configured to be magnetically coupled to the second direction-switching winding 122 and the second armature winding 32 to drive the mover module 40 to move in the second direction YY.

It should be noted that the first permanent magnet array 42 and the second permanent magnet array 43 each include a plurality of permanent magnets; the plurality of permanent magnets in the first permanent magnet array 42 may be arranged in the first direction XX, such that the first permanent magnet array 42, after being magnetically coupled to the first direction-switching winding 121 or the first armature winding 22, may drive the mover module 40 to move in the first direction XX; and the plurality of permanent magnets in the second permanent magnet array 43 may be arranged in the second direction YY, such that the second permanent magnet array 43, after being magnetically coupled to the second direction-switching winding 122 or the second armature winding 32, may drive the mover module 40 to move in the second direction YY.

In one embodiment, referring to FIG. 7, an accommodating groove 44 may be provided in the mover body 41, and the first permanent magnet array 42 and the second permanent magnet array 43 are both accommodated in the accommodating groove 44 to reduce the overall thickness of the mover module 40.

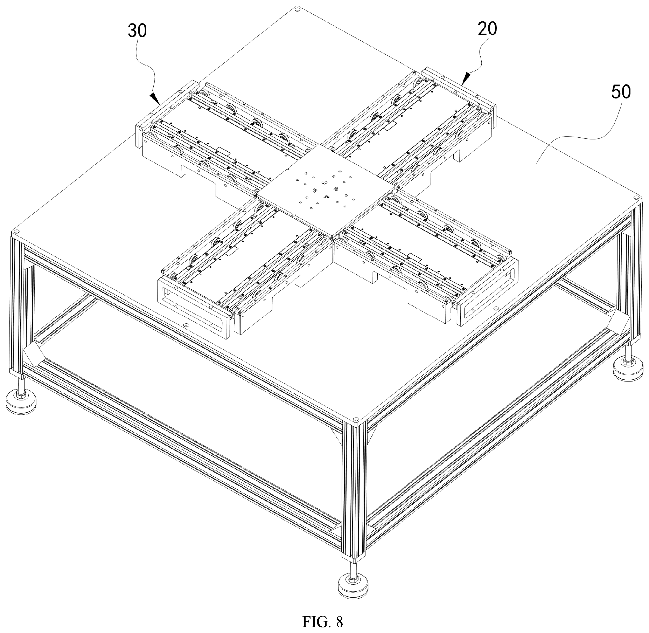

In one embodiment, as shown in FIG. 8, the magnetic drive conveyor line may further include a support platform 50, and the magnetic drive conveyor line may be arranged on the support platform 50 to increase the height of the magnetic drive conveyor line, such that the height of the magnetic drive conveyor line may be adjusted.

The above embodiments are merely preferred ones of the present application and are not used to limit the present application. Any modifications, equivalent substitutions and improvements made based on the spirit and principle of the present application should fall within the protection scope of the present application.

## Claims

1. A direction-switching stator module, configured to implement direction switching of a mover module on a magnetic drive conveyor line and comprising:
a direction-switching stator body;
a direction-switching armature winding, arranged on the direction-switching stator body, wherein the direction-switching armature winding comprises a first direction-switching winding extending in a first direction and a second direction-switching winding extending in a second direction, the first direction-switching winding is configured to drive the mover module to move in the first direction, and the second direction-switching winding is configured to drive the mover module to move in the second direction;
a first guide assembly, comprising a first guide member and a first driving member for driving the first guide member to ascend and descend, wherein the first guide member extends in the first direction and is configured to limit and guide the mover module, so as to guide the mover module to move in the first direction, the first guide member comprises a first support and a plurality of first rollers, the first driving member is configured to drive the first support to ascend and descend, the first rollers are rotatably connected to the first support and are rotatable about a first axis, the first axis is perpendicular to the first direction and perpendicular to a vertical direction, and the plurality of first rollers are arranged in the first direction and configured to be in contact with the mover module, so as to guide the mover module to move in the first direction; and
a second guide assembly, comprising a second guide member and a second driving member for driving the second guide member to ascend and descend, wherein the second guide member extends in the second direction and is configured to limit and guide the mover module, so as to guide the mover module to move in the second direction, the second guide member comprises a second support and a plurality of second rollers, the second driving member is configured to drive the second support to ascend and descend, the second rollers are rotatably connected to the second support and are rotatable about a second axis, the second axis is perpendicular to the second direction and perpendicular to the vertical direction, and the plurality of second rollers are arranged in the second direction and configured to be in contact with the mover module, so as to guide the mover module to move in the second direction.

2. The direction-switching stator module according to claim 1, wherein the first guide member is spaced apart from the direction-switching stator body in the second direction, and the second guide member is spaced apart from the direction-switching stator body in the first direction.

3. The direction-switching stator module according to claim 1, wherein the first driving member and the second driving member are both fixed to a side portion of the direction-switching stator body.

4. The direction-switching stator module according to claim 1, wherein when the mover module moves onto the direction-switching stator module, the first rollers and the second rollers are all located below the mover module, and the first rollers and the second rollers are configured to come into contact with a bottom of the mover module.

5. The direction-switching stator module according to claim 1, wherein
the first support is spaced apart from the direction-switching stator body in the second direction, and the first rollers are located on a side of the first support close to the direction-switching stator body; and
the second support is spaced apart from the direction-switching stator body in the first direction, and the second rollers are located on a side of the second support close to the direction-switching stator body.

6. The direction-switching stator module according to claim 1, wherein one said first guide assembly is arranged on each of two sides of the direction-switching stator body in the second direction, a first limiting groove is defined between the first supports of the two first guide assemblies, and the first limiting groove extends in the first direction to guide the mover module to move in the first direction; and
one said second guide assembly is arranged on each of two sides of the direction-switching stator body in the first direction, a second limiting groove is defined between the second supports of the two second guide assemblies, and the second limiting groove extends in the second direction to guide the mover module to move in the second direction.

7. The direction-switching stator module according to claim 1, wherein the first direction-switching winding and the second direction-switching winding are arranged in a crossed manner.

8. A magnetic drive conveyor line, comprising a first stator module, a second stator module, and the direction-switching stator module according to any one of claims 1 to 7, wherein the first stator module extends in the first direction, the second stator module extends in the second direction, and the direction-switching stator module is located at a junction between the first stator module and the second stator module; and
the first stator module comprises a first stator body and a first armature winding that extend in the first direction, the second stator module comprises a second stator body and a second armature winding that extend in the second direction, two sides of the direction-switching stator body are connected to the first stator body and the second stator body respectively, the first direction-switching winding is connected to the first armature winding, and the second direction-switching winding is connected to the second armature winding.

9. The magnetic drive conveyor line according to claim 8, wherein the first stator module further comprises a third guide member, and the third guide member extends in the first direction and is configured to limit and guide the mover module, so as to guide the mover module to move in the first direction; the third guide member comprises a third support and a plurality of third rollers, wherein the third support extends in the first direction, the third rollers are rotatably connected to the third support and are rotatable about a third axis, the third axis is perpendicular to the first direction and perpendicular to the vertical direction, and the plurality of third rollers are arranged in the first direction and configured to be in contact with the mover module, so as to guide the mover module to move in the first direction;
the second stator module further comprises a fourth guide member, and the fourth guide member extends in the second direction and is configured to limit and guide the mover module, so as to guide the mover module to move in the second direction; the fourth guide member comprises a fourth support and a plurality of fourth rollers, wherein the fourth support extends in the second direction, the fourth rollers are rotatably connected to the fourth support and are rotatable about a fourth axis, the fourth axis is perpendicular to the second direction and perpendicular to the vertical direction, and the plurality of fourth rollers are arranged in the second direction and configured to be in contact with the mover module, so as to guide the mover module to move in the second direction.

10. A magnetic drive conveyor system, comprising a mover module and the magnetic drive conveyor line according to claim 8 or 9, wherein the mover module comprises:
a mover body;
a first permanent magnet array, arranged on the mover body and configured to be magnetically coupled to the first direction-switching winding and the first armature winding to drive the mover module to move in the first direction; and
a second permanent magnet array, arranged on the mover body and configured to be magnetically coupled to the second direction-switching winding and the second armature winding to drive the mover module to move in the second direction.
